(19) Europäisches Patentamt
European Patent Office
Office européen des brevets

(11) **EP 2 022 116 B1**

(12) **FASCICULE DE BREVET EUROPEEN**

(45) Date de publication et mention
de la délivrance du brevet:
**04.08.2010 Bulletin 2010/31**

(21) Numéro de dépôt: **07766073.6**

(22) Date de dépôt: **18.05.2007**

(51) Int Cl.:
***H01M 4/02*** *(2006.01)*        ***H01M 4/74*** *(2006.01)*

(86) Numéro de dépôt international:
**PCT/FR2007/051299**

(87) Numéro de publication internationale:
**WO 2007/135331 (29.11.2007 Gazette 2007/48)**

(54) **ELECTRODE TEXTILE ET ACCUMULATEUR CONTENANT UNE TELLE ELECTRODE.**

TEXTILELEKTRODE UND AKKUMULATOR MIT EINER SOLCHEN ELEKTRODE

TEXTILE ELECTRODE AND ACCUMULATOR CONTAINING SUCH AN ELECTRODE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.05.2006 FR 0604693**

(43) Date de publication de la demande:
**11.02.2009 Bulletin 2009/07**

(73) Titulaire: **Electricité de France**
**75008 Paris (FR)**

(72) Inventeurs:
• **VIDAL, Elodie**
**F-77690 Montigny Sur Loing (FR)**
• **LASCAUD, Stéphane**
**F-77300 Fontainebleau (FR)**

(74) Mandataire: **Cabinet Plasseraud**
**52, rue de la Victoire**
**75440 Paris Cedex 09 (FR)**

(56) Documents cités:
**EP-A2- 0 717 457      EP-A2- 0 936 687**
**WO-A-94/17224       FR-A1- 2 762 142**
**FR-A1- 2 870 639      JP-A- 1 239 770**
**JP-A- 62 198 055      KR-A- 2003 060 165**

**Description**

L'invention concerne une nouvelle électrode à base d'un textile de fils et/ou de fibres métalliques nanostructurés en surface, ainsi qu'un demi-accumulateur et un accumulateur contenant une telle électrode.

L'extraordinaire essor du marché des appareils électroniques portables suscite en amont une émulation de plus en plus importante dans le domaine des batteries rechargeables ou accumulateurs. Outre le téléphone mobile qui connaît un développement fulgurant, les ventes des ordinateurs portables, avec une progression de 20% par an, impliquent de nouvelles exigences quant aux performances de leurs systèmes d'alimentation. A cela s'ajoute aussi l'expansion du marché des caméscopes, des appareils photos numériques, des baladeurs CD, des outils sans fils et de nombreux jouets qui requièrent de plus en plus souvent des batteries rechargeables. Enfin, il est probable que le XXIème siècle verra un développement considérable du véhicule électrique, des véhicules hybrides et des véhicules hybrides rechargeables sur le réseau électrique, dont l'émergence résulte de la réglementation internationale de plus en plus sévère quant aux émissions polluantes et à effet de serre des moteurs thermiques.

Les nouvelles générations d'appareils électroniques nécessitent le développement d'accumulateurs aux autonomies accrues et se présentant sous une forme à la fois mince et flexible compatible avec la miniaturisation des objets. Pour le marché des véhicules électriques, hybrides et hybrides rechargeables sur le réseau électrique, il est important de disposer d'accumulateurs à la fois légers, compacts, sécuritaires et d'un prix très compétitif pour concurrencer des solutions de motorisation conventionnelle.

La terminologie lithium métal (ou Li métal) définit généralement la technologie dans laquelle l'anode ou électrode négative comprend du métal, l'électrolyte contient des ions lithium, et la cathode ou électrode positive comprend au moins un matériau réagissant électrochimiquement de façon réversible avec le lithium. Le matériau réagissant électrochimiquement de façon réversible avec le lithium est par exemple un matériau d'insertion, contenant ou non du lithium. L'électrolyte contient généralement des ions lithium, que l'électrolyte soit liquide ou un polymère chargé en sel de lithium - on parle alors dans ce dernier cas généralement de polymère sec.

La terminologie lithium ion (Li ion) définit généralement la technologie dans laquelle la cathode comprend un matériau d'insertion comprenant du lithium, l'anode comprend au moins un matériau réagissant électrochimiquement de façon réversible avec le lithium, et l'électrolyte contient des ions lithium. Le matériau réagissant électrochimiquement de façon réversible avec le lithium est par exemple un matériau d'insertion, contenant ou non du lithium, ou du carbone. L'électrolyte contient généralement des ions lithium, que ce soit sous forme liquide ou sous forme de polymère imprégné de liquide - on parle alors dans ce dernier cas généralement d'électrolyte plastique.

La technologie lithium métal, et la technologie lithium ion sont susceptibles de répondre aux besoins des véhicules électriques, hybrides ou hybrides rechargeables, mais restent à des prix élevés compte tenu de la nature des matériaux employés et d'un niveau de sécurité insuffisant.

La densité d'énergie massique des accumulateurs ci-dessus, exprimée en Wh/kg d'accumulateur, reste une limitation importante des batteries pour leur application aux transports électriques, par exemple dans des véhicules électriques, hybrides avec autonomie électrique (rechargeables ou non) ou bus électriques. Les meilleures batteries actuelles de type lithium-ion ont une densité d'énergie massique comprise entre 100 et 120 Wh/kg avec un coût encore trop important pour une utilisation à grande échelle.

La demande de brevet français FR 2 870 639 au nom de la Demanderesse décrit une électrode pour accumulateurs lithium-ion ou lithium-métal caractérisée par la présence, à la surface du collecteur d'électrons, d'un revêtement de matière électrochimiquement active « nanostructurée » contenant des nanoparticules constituées d'un composé, par exemple d'un oxyde, du métal ou des métaux formant le collecteur d'électrons. La structure particulière de la matière électrochimiquement active permet d'améliorer les performances en termes de puissance et de densité d'énergie massique.

La densité d'énergie massique de ces batteries est toutefois toujours limitée, entre autres en raison de la limitation de la capacité massique des électrodes.

La densité d'énergie massique de ces batteries, exprimée en Wh par kg de batterie, est une fonction croissante de la capacité massique des électrodes positive et négative, exprimée en Ah par kg d'électrode. En d'autres termes, une augmentation de la capacité massique de l'électrode négative conduira à une augmentation de la densité d'énergie massique de la batterie. La capacité massique de l'électrode négative peut s'écrire de la façon suivants :

$$C_m = C_s \frac{S_{géo}}{m_-} \quad (1)$$

où

$C_m$ est la capacité massique de l'électrode négative (Ah/kg)

$C_s$ est la capacité surfacique de l'électrode négative (Ah/m$^2$)

$S_{géo}$ est la surface géométrique de l'électrode négative (m$^2$)

$m_-$ est la masse de l'électrode négative (kg).

Le terme « surface géométrique » tel qu'il est utilisé dans la présente demande pour décrire l'électrode textile, se réfère aux dimensions à l'échelle macroscopique du tissu métallique. Cette surface géométrique est indépendante de la structure du textile, c'est-à-dire du nombre, de la forme et de la taille des fils le constituant ou de la dimension des mailles du tissu. La surface géométrique reflète donc uniquement l'encombrement du textile à l'intérieur de l'accumulateur.

La capacité surfacique de l'électrode négative peut s'exprimer de la manière suivants :

$$C_s = \frac{C_-}{S_{dev}} \cdot \frac{S_{dev}}{S_{geo}} \quad (2)$$

où

$C_-$ est la capacité de l'électrode négative (Ah)

$S_{dev}$ est la surface développée de l'électrode négative (m$^2$), et

$S_{géo}$ est la surface géométrique de l'électrode négative (m$^2$).

Le terme « surface développée » désigne ici la surface du tissu métallique à l'échelle microscopique, autrement dit l'interface réelle entre les fils métalliques (collecteur d'électrons) et le milieu environnant (avant la formation de la couche de conversion) ou l'interface entre la couche de conversion formée à la surface des fils métalliques et l'environnement. Cette surface s'exprime en m$^2$.

Le textile métallique sera aussi caractérisé par sa « surface spécifique », déterminée par la méthode BET et correspondant au rapport entre la « surface développée » et la « surface géométrique », exprimée en m$^2$/m$^2$.

La combinaison des équations (1) et (2) conduit à:

$$C_m = \frac{C_-}{S_{dev}} \cdot \frac{S_{dev}}{m_-} \quad (3)$$

La valeur du rapport $C_-/S_{dev}$ est liée à la nature chimique et à l'épaisseur de la couche de matière électrochimiquement active présente dans l'électrode. En effet, il peut s'écrire comme étant le produit de la capacité par unité de masse de matière active ($C_-/m_{ma}$) et de la masse de matière active par unité de surface développée ($m_{ma}/S_{dev}$).

D'où :

$$C_m = \frac{C_-}{m_{ma}} \cdot \frac{m_{ma}}{S_{dev}} \cdot \frac{S_{dev}}{m_-}$$

La capacité par unité de masse de matière active ($C_-/m_{ma}$) est proportionnelle au nombre d'électrons mis en jeu dans l'équation de la réaction électrochimique se déroulant à l'électrode. Elle est fixée par la nature chimique de la matière électrochimiquement active.

La masse de matière active par unité de surface développée ($m_{ma}/S_{dev}$) correspond au produit de l'épaisseur de la couche de matière électrochimiquement active et de la densité de la matière active. Elle est ainsi fixée par la nature chimique de la matière active et son procédé de fabrication qui détermine l'épaisseur de la couche.

La Demanderesse a trouvé un moyen d'augmenter la capacité massique d'une électrode pour accumulateurs de type lithium-ion ou lithium-métal, et par conséquent la densité d'énergie massique de ces accumulateurs, en configurant une des électrodes d'un tel accumulateur sous forme d'un textile à base de fils et/ou de fibres métalliques (collecteur d'électrons) comportant un revêtement de matière électrochimiquement active nanostructurée telle que décrite dans la demande FR 2 870 639.

Le choix d'une structure de type textile pour une des électrodes d'un tel accumulateur lithium-ion ou lithium-métal permet en effet, pour une nature chimique et une épaisseur de couche de matière active donnée, d'augmenter considérablement l'aire de l'interface collecteur d'électrons - matière électrochimiquement active par unité de masse d'électrode ($S_{dev}/m_-$).

La présente invention a par conséquent pour objet une électrode, pour accumulateur lithium-ion ou lithium-métal, comprenant

(a) un collecteur d'électrons contenant un ou plusieurs métaux de transition des groupes 4 à 12 de la Classification Périodique des Elements, et

(b) une matière électrochimiquement active, présente à la surface du collecteur d'électrons sous forme d'une couche de conversion nanostructurée contenant des nanoparticules ou des agglomérats desdites nanoparticules, les nanoparticules ayant un diamètre moyen compris entre 1 et 1000 nm, de préférence entre 10 à 300 nm, ladite matière électrochimiquement active contenant au moins un composé du métal de transition ou des métaux de transition présent(s) dans le collecteur d'électrons,

caractérisée par le fait que l'électrode est un textile formé de fils et/ou de fibres métalliques et par le fait qu'elle présente une surface spécifique, exprimée par unité de surface, comprise entre 2 et 100 $m^2/m^2$ de surface géométrique d'électrode.

Comme expliqué dans la demande de brevet FR 2 870 639 dont la présente invention est un perfectionnement, la couche nanostructurée contenant des nanoparticules d'au moins un composé d'un métal de transition présent dans le collecteur d'électrons est une couche de conversion, c'est-à-dire une couche obtenue par transformation chimique ou électrochimique de la surface du métal du support. Les avantages connus d'une telle couche de conversion sont en particulier la bonne adhérence au support du revêtement de surface formé et la grande facilité avec laquelle une telle couche peut être fabriquée par simple traitement du métal de départ. A ces avantages, connus dans la technique des traitements de surface des métaux, s'ajoute un avantage particulier lié à la structure fine textile de l'électrode de l'invention. En effet, lors de la formation de la matière électrochimiquement active, il est indispensable de conserver la structure textile de l'électrode, c'est-à-dire de ne pas faire disparaître les ouvertures ou mailles du tissu par obturation. Or, la formation d'une couche électrochimiquement active par dépôt d'un revêtement sur la structure textile entraîne un risque important de fermeture des ouvertures (mailles) du textile qui annulerait les avantages inhérents à une telle structure textile. Ce risque d'obturation des ouvertures du textile est bien évidemment d'autant plus fort que les ouvertures sont petites. La préparation de la matière active par formation d'une couche de conversion limite le risque d'obturation des ouvertures du textile car aucun métal ni autre matériau n'est apporté de l'extérieur et les dimensions microscopiques (diamètre et espacement des fils) de l'électrode (collecteur d'électron + matière active) sont ainsi sensiblement identiques à celles du textile de départ utilisé.

Le textile de fils métalliques utilisé pour former l'électrode selon l'invention peut être un textile tissé, non-tissé ou tricoté. Il s'agit de préférence d'un textile tissé.

Le textile métallique utilisé pour former l'électrode de la présente invention est de préférence formé de fils très fins, relativement peu espacés les uns des autres. En effet, plus les fils sont fins et plus le nombre de fils par unité de surface est important, plus la surface spécifique BET telle que définie ci-dessus (surface développée par $m^2$ de surface géométrique) est élevée. La finesse des fils peut toutefois être limitée par l'aptitude au tréfilage des métaux ou alliages métalliques utilisés. Alors que certains métaux et alliages tels que le cuivre, l'aluminium, le bronze, le laiton et certains aciers alliés au chrome et au nickel se prêtent très bien au tréfilage et peuvent ainsi être obtenus sous forme de fils très fins, d'autres métaux ou alliages tels que les aciers ordinaires sont plus difficiles à tréfiler et ne peuvent être obtenus que sous forme de fils relativement plus grossiers, ayant un diamètre équivalent de l'ordre de quelques centaines de micromètres.

De manière générale, le diamètre équivalent de la section des fils ou fibres métalliques formant le textile de départ ou des fils de l'électrode textile couverts d'une couche de conversion de matière active est compris entre 5 $\mu m$ et 1 mm, de préférence entre 10 $\mu m$ et 100 $\mu m$ et en particulier entre 15 $\mu m$ et 50 $\mu m$. On entend par « diamètre équivalent » le diamètre du cercle possédant la même surface que la section des fils.

Le faible diamètre équivalent des fils formant l'électrode de la présente invention permet avantageusement de limiter la masse de celle-ci, en vue de son utilisation dans des accumulateurs. Ainsi, l'électrode selon l'invention, constituée du collecteur d'électrons couvert d'une couche de conversion, présente avantageusement une masse surfacique inférieure à 1000 $g/m^2$ de surface géométrique, de préférence comprise entre 10 et 500 $g/m^2$ de surface géométrique.

Comme expliqué en introduction, le principal objectif de la présente invention est de proposer des électrodes pour accumulateurs lithium-ion ou lithium-métal ayant une surface active maximale pour un minimum de masse de collecteur d'électrons (réduction des coûts liés à la matière première métallique) et pour un minimum d'encombrement (miniaturisation des accumulateurs). En utilisant des textiles métalliques tels que décrits ci-dessus, la Demanderesse a réussi à préparer des électrodes présentant une surface spécifique (exprimée par unité de surface) comprise entre 2 et 100 $m^2/m^2$, de préférence entre 20 et 80 $m^2/m^2$ de surface géométrique d'électrode, ou une surface développée par unité de masse d'électrode comprise entre $10^{-3}$ et 5 m$^2$/g, de préférence entre $10^{-2}$ et 3 m$^2$/g d'électrode.

L'électrode selon la présente invention se distingue de celle divulguée et revendiquée dans la demande FR 2 870 639 de la Demanderesse principalement par sa structure textile. En ce qui concerne la composition chimique du collecteur d'électrons et de la couche de conversion, les caractéristiques techniques de l'électrode de la présente invention sont similaires à celles divulguées dans FR 2 870 639, à ceci près qu'il est nécessaire de sélectionner parmi les métaux et alliages métalliques divulgués dans ce document ceux ayant une aptitude au tréfilage et au tissage appropriée.

Dans un mode de réalisation préféré de l'invention, le ou lesdits métaux de transition du collecteur d'électrons sont choisis dans le groupe formé par le nickel, le cobalt, le manganèse, le cuivre, le chrome et le fer, de préférence parmi le fer et le chrome.

Lors de la formation de la couche de conversion formant la matière active de l'électrode selon l'invention, ces métaux sont convertis par un traitement approprié, décrit plus en détail ci-après, en un composé dudit ou desdits métaux de transition. Ce composé est de préférence un composé minéral et est choisi avantageusement parmi les chalcogénures et les halogénures, de préférence parmi les chalcogénures (oxygène, soufre, sélénium et tellure), et de manière particulièrement préférée le composé métallique présent dans la couche de conversion est un oxyde métallique.

Dans un mode de réalisation particulièrement préféré de l'invention, le composé du métal de transition est un composé de formule

$$M_xO_y,$$

où $1 \leq x \leq 3$ et $1 \leq y \leq 5$, de préférence $1 \leq y \leq 4$, et M est au moins un métal de transition. Ce composé est choisi de préférence dans le groupe formé par les structures spinelles $AB_2O_4$, où A est au moins un métal de transition choisi dans le groupe formé par Fe, Mn, Cr, Ni, Co et Cu, et B est au moins un métal choisi dans le groupe formé par Fe, Cr et Mn, et/ou dans le groupe formé par les sesquioxydes $M'_2O_3$, où M' est au moins un métal de transition choisi dans le groupe formé par Fe, Mn, Cr, Ni, Co et Cu.

Le composé de métal de transition est en particulier du $Cr_2O_3$ ou un composé répondant à la formule $Fe_{x'}Cr_{y'}Mn_{z'}O_4$,
où : $0 \leq x' \leq 1$, $0 \leq z' \leq 1$, et $x' + y' + z' = 3$.

De préférence, la valence de M est égale à 2 ou 3, en particulier égale à 3. Les composés de formule $Fe_{x'}Cr_{y'}Mn_{z'}O_4$ englobent par exemple les composés de formule $Fe_{x'}Cr_{1-x'}Cr_2O_4$ où x' a la valeur indiquée ci-dessus.

Comme indiqué précédemment, la couche de conversion de l'électrode textile de la présente invention est une couche « nanostructurée » contenant des nanoparticules ayant un diamètre moyen compris entre 1 et 1000 nm, de préférence entre 10 à 300 nm. Une telle couche nanostructurée se distingue par une structure rugueuse et poreuse, et contient au moins 50 % en poids, de préférence au moins 70 % en poids de nanoparticules

Dans la couche de conversion de l'électrode textile, les nanoparticules sont de préférence regroupées et agglomérées les unes aux autres, les agglomérats ayant de préférence une taille moyenne comprise entre 1 et 10000 nm, en particulier entre 10 et 3000 nm. La structure poreuse à base d'agglomérats de nanoparticules peut être mise en évidence par exemple par microscopie électronique à balayage.

La couche de conversion (matière électrochimiquement active) recouvre de préférence entièrement la surface du collecteur d'électrons et a de préférence une épaisseur comprise entre 30 nm et 15000 nm, en particulier entre 30 nm et 12000 nm.

Selon un mode de réalisation particulièrement intéressant, le collecteur d'électrons est un tissu formé d'un alliage contenant du chrome, par exemple un alliage de fer et de chrome. De préférence le collecteur d'électrons est en acier inoxydable.

Les tissus métalliques à base de métaux de transition susceptibles d'être utilisés, après formation d'une couche de conversion nanostructurée telle que décrite ci-dessus, en tant qu'électrode d'un accumulateur lithium-ion ou lithium-métal sont connus dans la technique et sont disponibles sur le marché par exemple sous les dénominations suivantes : maille carrée unie, maille carrée croisée, reps de trame uni, reps de trame croisé, reps de chaîne uni, reps de chaîne croisé.

La formation de la couche de conversion nanostructurée est décrite dans la demande FR 2 870 639. Le traitement utilisé dans ce document peut être appliqué sans autres précautions ou modifications aux textiles métalliques décrits ci-dessus. Ledit traitement de conversion est par exemple un traitement thermique à haute température sous atmosphère réductrice, neutre ou oxydante. Ces traitements sont des traitements connus de l'homme du métier et sont mis en oeuvre couramment.

Il peut s'agir par exemple d'un traitement sous hydrogène à une température comprise entre 500 et 1000°C, de préférence entre 600 et 800°C, par exemple à une température voisine de 700°C, pendant une durée allant de 1h à 16h.

Il peut également s'agir d'un traitement thermique sous air à une température comprise par exemple entre 600 et 1200°C, de préférence entre 800 et 1150°C, par exemple à une température proche de 1000°C, pendant une durée allant de 1 min à 16h.

La couche de conversion formée à l'issue du traitement thermique oxydant ou réducteur ne présente généralement pas la structure nanostructurée définitive recherchée de l'électrode textile de l'invention. La nanostructuration finale de l'électrode, c'est-à-dire la formation de nanoparticules, ne se produit que lors de la première décharge de l'accumulateur. On peut bien entendu soumettre l'électrode textile à une telle décharge avant de l'incorporer dans un accumulateur au lithium. Cette première décharge peut se faire par exemple par réduction de l'électrode textile par rapport à une électrode de lithium dans un électrolyte organique chargé en sel de lithium, à une densité de courant réduite (0,05 à 0,5 mA/cm$^2$ de surface géométrique d'électrode) jusqu'à un potentiel de 20 mV par rapport au lithium, puis oxydation de la dite électrode textile à une densité de courant réduite (0,05 à 0,5 mA/cm$^2$ de surface géométrique d'électrode) jusqu'à un potentiel de 3000 mV par rapport au lithium.

La présente invention a en outre pour objet un demi-accumulateur électrochimique et un accumulateur électrochimique contenant une électrode textile telle que décrite ci-avant.

Un demi-accumulateur électrochimique selon l'invention comprend une électrode textile avec une couche de conversion nanostructurée, telle que décrite précédemment, ladite électrode textile étant recouverte sur toute sa surface d'un revêtement assurant la fonction de séparateur d'électrodes de batterie. Ce revêtement est destiné à séparer électriquement les deux électrodes de l'accumulateur. Ce séparateur doit en outre pouvoir être imprégné d'un électrolyte liquide comprenant au moins un sel de lithium et a de ce fait de préférence une structure poreuse ou une structure de type polymère susceptible d'être gonflée par l'électrolyte. Afin de conserver les avantages découlant directement de la structure textile de l'électrode de la présente invention, c'est-à-dire une surface spécifique élevée qui se traduit par une capacité massique et une densité d'énergie massique importantes, il est essentiel d'effectuer le dépôt du séparateur de manière à ce que cette structure textile soit toujours apparente dans le demi-accumulateur. Autrement dit, le dépôt du séparateur ne doit pas obturer les ouvertures ou mailles du textile métallique formant l'électrode, mais doit préserver de préférence au moins 50 %, en particulier au moins 70 % et idéalement la totalité des ouvertures du textile métallique de départ. L'obturation ou la préservation de ces ouvertures dépend entre autres de l'épaisseur du séparateur déposé. Celui-ci doit avoir une épaisseur suffisamment faible pour qu'au moins une partie des ouvertures de l'électrode textile ne soient pas fermées par ledit séparateur.

Bien que le dépôt d'un tel séparateur puisse se faire par différentes méthodes appropriées, telles que l'immersion, la pulvérisation ou le dépôt chimique en phase vapeur, le dépôt de ce revêtement se fait de préférence par voie électrochimique et en particulier selon une technique connue sous le nom de cataphorèse. Cette technique où la structure métallique ou le fil à revêtir est introduit, en tant que cathode, dans une solution aqueuse contenant les composants de base du revêtement à déposer, permet en effet un dépôt extrêmement fin, régulier et continu, couvrant la totalité de la surface d'une structure, même de géométrie très complexe. Pour pouvoir migrer vers la cathode, c'est-à-dire vers la structure ou le fil à revêtir, le composant à déposer doit avoir une charge positive. Il est connu par exemple d'utiliser des monomères cationiques qui, après dépôt sur la cathode et polymérisation, forment un revêtement polymère insoluble.

Dans un mode de réalisation préféré du demi-accumulateur de la présente invention, le séparateur est déposé par cataphorèse à partir d'une solution aqueuse contenant de tels monomères cationiques, de préférence des monomères cationiques comportant des fonctions amine quaternaire.

Dans un mode de réalisation préféré du demi-accumulateur de la présente invention, le séparateur est déposé par cataphorèse, à partir de ladite solution aqueuse, sur l'électrode textile avec une couche de conversion nanostructurée, telle que décrite précédemment. On peut toutefois également envisager un mode de réalisation où le séparateur est déposé par cataphorèse, à partir de ladite solution aqueuse, sur les fils ou fibres métalliques présentant une couche de conversion nanostructurée, tels que décrits précédemment, avant que ceux-ci soient assemblés par exemple par une technique de tissage ou de tricotage pour réaliser une structure textile.

Le demi-accumulateur décrit ci-dessus, formé par l'électrode textile revêtue d'un séparateur, peut être incorporé dans un accumulateur électrochimique, objet de la présente invention, comprenant, outre ledit demi-accumulateur, un électrolyte liquide imprégnant le séparateur du demi-accumulateur, et une électrode de polarité opposée à celle du demi-accumulateur, recouvrant de préférence totalement la surface du séparateur imprégné par l'électrolyte.

Dans un mode de réalisation préféré de la présente invention, l'accumulateur est un accumulateur lithium-ion, comprenant

(i) un demi-accumulateur tel que décrit ci-dessus, comprenant une anode avec un séparateur,
(ii) un électrolyte liquide contenant un sel de lithium, imprégnant le séparateur du demi-accumulateur,
(iii) en tant que cathode, un mélange comprenant un matériau d'insertion aux ions lithium, un liant polymère et un conducteur électronique secondaire, recouvrant la surface du séparateur imprégné par l'électrolyte, et
(iv) un collecteur de courant de la cathode, par exemple en aluminium.

Les électrolytes liquides comprenant un sel de lithium, utilisables dans les accumulateurs lithium-ion, sont connus de l'homme du métier. On peut citer à titre d'exemple de sels de lithium LiCF$_3$SO$_3$, LiClO$_4$, LiN(C$_2$F$_5$SO$_2$)$_2$, LiN(CF$_3$SO$_2$)$_2$, LiAsF$_6$, LiSbF$_6$, LiPF$_6$ et LiBF$_4$. De préférence ledit sel est choisi dans le groupe formé par LiCF$_3$SO$_3$, LiClO$_4$,

LiPF$_6$, et LiBF$_4$.

En général, ledit sel est dissous dans un solvant organique anhydre, constitué généralement de mélanges en proportions variables de carbonate de propylène, de carbonate de diméthyle et de carbonate d'éthylène. Ainsi, ledit électrolyte comprend généralement, comme il est connu de l'homme du métier, au moins un carbonate cyclique ou acyclique, de préférence cyclique. Par exemple, ledit électrolyte est du LP30, composé commercial de la société Merck comportant de l'EC (carbonate d'éthylène), du DMC (carbonate de diméthyle), et du sel LiPF$_6$, la solution étant 1 molaire en sel et 50%/50% par poids en solvant.

La cathode de l'accumulateur lithium-ion comprend par exemple, de manière connue, au moins un matériau d'insertion aux ions lithium, tel que LiCoO$_2$, LiFePO$_4$, LiCo$_{1/3}$Ni$_{1/3}$Mn$_{1/3}$O$_2$ ou LiMn$_2$O$_4$ ou un composé de type LiMX$_2$ où M est un métal de transition et X représente un atome d'halogène.

Contrairement à ce qui a été expliqué précédemment pour le dépôt du séparateur sur l'électrode textile, il n'est pas essentiel que ladite structure textile de l'électrode soit toujours apparente après le dépôt du matériau formant l'électrode de charge opposée, en particulier la cathode de l'accumulateur lithium-ion. Autrement dit, le matériau formant l'électrode de polarité opposée à celle de l'électrode textile, comble de préférence au moins une partie des ouvertures ou mailles du demi-accumulateur, l'accumulateur apparaissant alors sous la forme d'une feuille continue ou d'un assemblage de feuilles, chaque feuille enfermant la structure textile décrite ci-avant.

Dans un mode de réalisation particulier de l'accumulateur de la présente invention, l'accumulateur comprend une structure textile assurant non seulement les fonctions d'électrode et de séparateur, c'est-à-dire de demi-accumulateur, mais aussi la fonction de collecteur de courant pour l'électrode de polarité opposée. La fonction de demi-accumulateur est alors assurée par exemple par les fils de chaîne de la structure textile et celle de collecteur de courant pour l'électrode de polarité opposée par les fils de trame, ou inversement. Les fils de chaîne sont dans ce cas des fils métalliques constitués d'un ou plusieurs métaux de transition des groupes 4 à 12 de la Classification Périodique des Eléments avec une couche de conversion nanostructurée et revêtus d'une couche de séparateur, telles que décrites précédemment. Les fils de trame sont des fils métalliques pouvant faire office de collecteur de courant pour l'électrode positive, par exemple en aluminium.

L'invention a en outre pour objet l'utilisation d'un accumulateur tel que décrit précédemment en tant que batterie pour des véhicules hybrides (rechargeables ou non), des véhicules électriques, des équipements portables et des applications stationnaires.

L'invention a enfin pour objet un supercondensateur comprenant une électrode textile selon la présente invention.

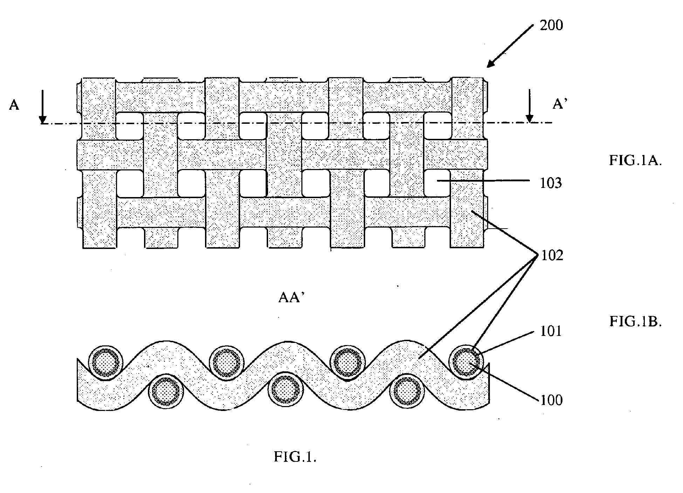

La Figure 1 représente un schéma d'un demi-accumulateur selon l'invention, en vue de dessus (FIG. 1A.) et en coupe (FIG. 1B.) selon la ligne AA' de la figure 1A. Un tel demi-accumulateur 200 comporte un collecteur d'électrons 100, typiquement en forme de tissu vu sur sa tranche sur la figure 1A, à la surface duquel a été formée une couche 101 de matière active. Cette couche de matière active a été réalisée par traitement thermique, par exemple sous air à haute température, du collecteur 100. Le collecteur 100 est typiquement en acier inoxydable. Le chrome (Cr), le fer (Fe) et le manganèse (Mn), constituants du collecteur 100, ont réagi avec l'oxygène (O$_2$) de l'air pour former des oxydes principalement à base de chrome sous forme de nanoparticules. Aucune matière extérieure n'a été ajoutée, tel qu'un conducteur électronique secondaire comme du noir de carbone, un liant ou un autre métal. Sur ce collecteur 100 et sa couche de conversion nanostructurée 101 a été déposée, typiquement par un procédé de cataphorèse, une couche de séparateur 102, sous la forme d'un film mince recouvrant entièrement la surface des fils du tissu métallique avec leur couche de conversion. Ce revêtement 102 a été déposé de façon à ne pas obturer les ouvertures 103 du tissu qui peuvent être distinguées sur la figure 1A. Ce séparateur présente la particularité de pouvoir être imprégné par un électrolyte liquide pour batterie lithium-ion.

## Revendications

1. Electrode comprenant

    (a) un collecteur d'électrons contenant un ou plusieurs métaux de transition des groupes 4 à 12 de la Classification Périodique des Eléments, et
    (b) une matière électrochimiquement active, présente à la surface du collecteur d'électrons sous forme d'une couche de conversion nanostructurée contenant des nanoparticules ou des agglomérats desdites nanoparticules, les nanoparticules ayant un diamètre moyen compris entre 1 et 1000 nm, de préférence entre 10 à 300 nm, ladite matière électrochimiquement active contenant au moins un composé du métal de transition ou des métaux de transition présent(s) dans le collecteur d'électrons,

    **caractérisée par le fait que** l'électrode est un textile formé de fils et/ou de fibres métalliques et **par le fait qu'**elle présente une surface spécifique, exprimée par unité de surface, comprise entre 2 et 100 m$^2$/m$^2$ de surface géométrique d'électrode.

**2.** Electrode selon la revendication 1, **caractérisé par le fait que** le textile de fils métalliques est un textile tissé, non-tissé ou tricoté, de préférence un textile tissé.

**3.** Electrode selon la revendication 1 ou 2, **caractérisée par le fait que** le diamètre équivalent de la section des fils ou fibres de l'électrode textile couverts d'une couche de conversion de matière active est compris entre 5 $\mu$m et 1 mm, de préférence entre 10 $\mu$m et 100 $\mu$m et en particulier entre 15 $\mu$m et 50 $\mu$m.

**4.** Electrode selon l'une quelconque des revendications précédentes, **caractérisée par le fait qu'**elle présente une masse surfacique inférieure à 1000 g/m$^2$ de surface géométrique, de préférence comprise entre 10 et 500 g/m$^2$ de surface géométrique.

**5.** Electrode selon l'une quelconque des revendications précédentes, **caractérisée par le fait qu'**elle présente une surface spécifique, exprimée par unité de surface, comprise entre 20 et 80 m$^2$/m$^2$ de surface géométrique d'électrode.

**6.** Electrode selon l'une quelconque des revendications précédentes, **caractérisée par le fait qu'**elle présente une surface développée par unité de masse d'électrode, comprise entre 10$^{-3}$ et 5 m$^2$/g d'électrode.

**7.** Electrode selon l'une quelconque des revendications précédentes, **caractérisée par le fait que** le ou lesdits métaux de transition du collecteur d'électrons sont choisis dans le groupe formé par le nickel, le cobalt, le manganèse, le cuivre, le chrome et le fer, de préférence parmi le fer et le chrome.

**8.** Electrode selon l'une quelconque des revendications précédentes, **caractérisée par le fait que** le ou les composés de métal de transition sont choisis parmi les chalcogénures et les halogénures, de préférence parmi les chalcogénures.

**9.** Electrode selon la revendication 8, **caractérisée par le fait que** le ou les composés de métal de transition sont choisis parmi les oxydes.

**10.** Electrode selon l'une quelconque des revendications précédentes, **caractérisée par le fait que** la matière électrochimiquement active recouvre entièrement la surface du collecteur d'électrons sous forme d'une couche de conversion ayant une épaisseur comprise entre 30 nm et 15000 nm, de préférence entre 30 nm à 12000 nm.

**11.** Electrode selon l'une quelconque des revendications précédentes, **caractérisée en ce que** le collecteur d'électrons est en acier inoxydable.

**12.** Demi-accumulateur électrochimique comprenant une électrode textile selon l'une quelconque des revendications précédentes recouverte, sur toute sa surface, d'un séparateur, ledit séparateur ayant une épaisseur suffisamment faible pour qu'au moins 50 % des ouvertures de l'électrode textile ne soient pas fermées par ledit séparateur.

**13.** Demi-accumulateur électrochimique selon la revendication 12, **caractérisé par le fait que** le séparateur comprend un polymère cationique, de préférence un polymère comportant des fonctions amine quaternaire.

**14.** Accumulateur électrochimique comprenant

(i) un demi-accumulateur selon la revendication 12 ou 13,
(ii) un électrolyte liquide imprégnant le séparateur du demi-accumulateur, et
(iii) une électrode de polarité opposée à celle du demi-accumulateur, recouvrant totalement la surface du séparateur imprégné par l'électrolyte.

**15.** Accumulateur lithium-ion selon la revendication 14, comprenant

(i) un demi-accumulateur selon la revendication 12 ou 13, comprenant une anode avec un séparateur,
(ii) un électrolyte liquide contenant un sel de lithium, imprégnant le séparateur du demi-accumulateur,
(iii) en tant que cathode, un mélange comprenant un matériau d'insertion aux ions lithium, un liant polymère et un conducteur électronique secondaire, recouvrant la surface du séparateur imprégné par l'électrolyte, et

(iv) un collecteur de courant de la cathode, par exemple en aluminium.

**16.** Supercondensateur comprenant une électrode selon l'une quelconque des revendications 1 à 11.

**Claims**

**1.** An electrode comprising:

(a) an electron collector containing one or more transition metals from groups IV to XII of the periodic table; and
(b) an electrochemically active material, present on the surface of the electron collector in the form of a nanostructured conversion layer containing nanoparticles or clusters of said nanoparticles, the nanoparticles having a mean diameter of between 1 and 1000 nm, preferably between 10 and 300 nm, said electrochemically active material containing at least one compound of the transition metal or transition metals present in the electron collector,

**characterized in that** the electrode is a textile formed from metal fibers and/or wires, and by the fact that it has a specific surface, expressed per unit surface, of between 2 and 100 $m^2/m^2$ of geometric surface of the electrode.

**2.** The electrode as claimed in claim 1, **characterized in that** the textile of metal wires is a woven, non-woven or knitted textile, preferably a woven textile.

**3.** The electrode as claimed in claim 1 or 2, **characterized in that** the equivalent diameter of the section of fibers or wires of the textile electrode covered with a conversion layer of active material is between 5 $\mu$m and 1 mm, preferably between 10 $\mu$m and 100 $\mu$m, and in particular between 15 $\mu$m and 50 $\mu$m.

**4.** The electrode as claimed in any one of the preceding claims, **characterized in that** it has a unit area mass of less than 1000 $g/m^2$ of geometric surface, preferably between 10 and 500 $g/m^2$ of geometric surface.

**5.** The electrode as claimed in any one of the preceding claims, **characterized in that** it has a specific surface, expressed per unit surface, of between 20 and 80 $m^2/m^2$ of geometric surface of the electrode.

**6.** The electrode as claimed in any one of the preceding claims, **characterized in that** it has a developed surface per unit mass of the electrode of between $10^{-3}$ and 5 $m^2/g$ of the electrode.

**7.** The electrode as claimed in any one of the preceding claims, **characterized in that** said transition metal(s) of the electron collector is (are) chosen from the group consisting of nickel, cobalt, manganese, copper, chromium and iron, preferably from iron and chromium.

**8.** The electrode as claimed in any one of the preceding claims, **characterized in that** the transition metal compound(s) is (are) chosen from chalcogenides and halides, preferably from chalcogenides.

**9.** The electrode as claimed in claim 8, **characterized in that** the transition metal compound(s) is (are) chosen from oxides.

**10.** The electrode as claimed in any one of the preceding claims, **characterized in that** the electrochemically active material completely covers the surface of the electron collector in the form of a conversion layer having a thickness of between 30 nm and 15 000 nm, preferably between 30 nm and 12 000 nm.

**11.** The electrode as claimed in any one of the preceding claims, **characterized in that** the electron collector is made of stainless steel.

**12.** An electrochemical half-accumulator comprising a textile electrode as claimed in any one of the preceding claims, covered over its entire surface with a separator, said separator having a small enough thickness for at least 50 % of the openings of the textile electrode not to be closed by said separator.

**13.** The electrochemical half-accumulator as claimed in claim 12, **characterized in that** the separator comprises a cationic polymer, preferably a polymer comprising quaternary amine functions.

14. An electrochemical accumulator comprising:

(i) a half-accumulator as claimed in claim 12 or 13;
(ii) a liquid electrolyte impregnating the separator of the half-accumulator; and
(iii) an electrode of polarity opposite to that of the half-accumulator, completely covering the surface of the separator impregnated with electrolyte.

15. The lithium-ion accumulator as claimed in claim 14, comprising:

(i) a half-accumulator as claimed in claim 12 or 13, comprising an anode with a separator;
(ii) a liquid electrolyte containing a lithium salt, impregnating the separator of the half-accumulator;
(iii) as a cathode, a mixture comprising a lithium ion insertion material, a polymer binder and a secondary electronic conductor, covering the surface of the separator impregnated with the electrolyte; and
(iv) a collector of current from the cathode, for example made of aluminum.

16. A supercapacitor comprising an electrode as claimed in any one of claims 1 to 11.

**Patentansprüche**

1. Elektrode, enthaltend

(a) einen Elektronenkollektor, der ein oder mehrere Übergangsmetall(e) der Gruppen 4 bis 12 des Periodensystems enthält, und
(b) ein elektrochemisch aktives Material, das an der Oberfläche des Elektronenkollektors in Form einer nanostrukturierten Konversionsschicht vorliegt, die Nanopartikel oder Agglomerate der Nanopartikel enthält, wobei die Nanopartikel einen mittleren Durchmesser von zwischen 1 und 1000 nm, vorzugsweise zwischen 10 und 300 nm, haben, wobei das elektrochemisch aktive Material wenigstens eine Verbindung des Übergangsmetalls oder der Übergangsmetalle, das/die im Elektronenkollektor vorliegt/vorliegen, enthält,

**dadurch gekennzeichnet, dass** die Elektrode eine Textilie ist, die aus Metallfäden und/oder Metallfasern gebildet ist, und dass sie eine spezifische Oberfläche, bezogen auf eine Flächeneinheit, zwischen 2 und 100 $m^2/m^2$ geometrischer Oberfläche der Elektrode aufweist.

2. Elektrode nach Anspruch 1, **dadurch gekennzeichnet, dass** die Textilie aus Metallfäden eine gewebte, nicht gewebte oder gestrickte Textilie, vorzugsweise eine gewebte Textilie, ist.

3. Elektrode nach Anspruch 1 oder 2, **dadurch gekennzeichnet, dass** der äquivalente Durchmesser des Querschnitts der Fäden oder Fasern der Textil-Elektrode, die von einer Konversionsschicht aus aktivem Material bedeckt sind, zwischen 5 $\mu$m und 1 mm, vorzugsweise zwischen 10 $\mu$m und 100 $\mu$m und insbesondere zwischen 15 $\mu$m und 50 $\mu$m, liegt.

4. Elektrode nach einem der vorangehenden Ansprüche, **dadurch gekennzeichnet, dass** sie eine flächenbezogene Masse von weniger als 1000 $g/m^2$ geometrischer Oberfläche, vorzugsweise zwischen 10 und 500 $g/m^2$ geometrischer Oberfläche, aufweist.

5. Elektrode nach einem der vorangehenden Ansprüche, **dadurch gekennzeichnet, dass** sie eine spezifische Oberfläche, bezogen auf eineflächeneinheit, von zwischen 20 und 80 $m^2/m^2$ geometrischer Oberfläche der Elektrode aufweist.

6. Elektrode nach einem der vorangehenden Ansprüche, **dadurch gekennzeichnet, dass** sie eine entwickelte Oberfläche, bezogen auf eine Masseneinheit der Elektrode, zwischen $10^{-3}$ und 5 $m^2/g$ Elektrode aufweist.

7. Elektrode nach einem der vorangehenden Ansprüche, **dadurch gekennzeichnet, dass** das Übergangsmetall oder die Übergangsmetalle des Elektronenkollektors aus der Gruppe, bestehend aus Nickel, Kobalt, Mangan, Kupfer, Chrom und Eisen, vorzugsweise aus Eisen und Chrom, ausgewählt sind.

8. Elektrode nach einem der vorangehenden Ansprüche, **dadurch gekennzeichnet, dass** die Übergangsmetallverbindung(en) ausgewählt ist/sind unter Chalkogeniden und Halogeniden, vorzugsweise unter Chalkogeniden.

9. Elektrode nach Anspruch 8, **dadurch gekennzeichnet, dass** die Übergangsmetallverbindung(en) unter Oxiden ausgewählt ist/sind.

10. Elektrode nach einem der vorangehenden Ansprüche, **dadurch gekennzeichnet, dass** das elektrochemisch aktive Material die Oberfläche des Elektronenkollektors in Form einer Konversionsschicht, die eine Dicke zwischen 30 nm und 15000 nm, vorzugsweise zwischen 30 nm und 12000 nm, hat, ganz bedeckt.

11. Elektrode nach einem der vorangehenden Ansprüche, **dadurch gekennzeichnet, dass** der Elektronenkollektor aus nicht-rostendem Stahl ist.

12. Elektrochemischer Halb-Akkumulator, enthaltend eine Textil-Elektrode nach einem der vorangehenden Ansprüche, die auf ihrer gesamten Oberfläche von einem Separator bedeckt ist, wobei der Separator eine ausreichend schwache Dicke hat, damit wenigstens 50 % der Öffnungen der Textil-Elektrode nicht durch den Separator verschlossen wird.

13. Elektrochemischer Halb-Akkumulator nach Anspruch 12, **dadurch gekennzeichnet, dass** der Separator ein kationisches Polymer, vorzugsweise ein Polymer, das quaternäre Aminfunktionen trägt, enthält.

14. Elektrochemischer Akkumulator, enthaltend

    (i) einen Halb-Akkumulator nach Anspruch 12 oder 13,
    (ii) einen flüssigen Elektrolyten, mit dem Separator des Halb-Akkumulators imprägniert ist, und
    (iii) eine Elektrode mit einer Polarität, die derjenigen des Halb-Akkumulators entgegengesetzt ist, die die gesamte Oberfläche des mit dem Elektrolyten imprägnierten Separators bedeckt.

15. Lithiumionen-Akkumulator nach Anspruch 14, enthaltend

    (i) einen Halb-Akkumulator nach Anspruch 12 oder 13, der eine Anode mit einem Separator umfasst,
    (ii) einen flüssigen ein Lithiumsalz enthaltenden Elektrolyten, mit dem der Separator des Halb-Akkumulators imprägniert ist,
    (iii) als Kathode ein Gemisch, enthaltend ein Insertionsmaterial für Lithiumionen, ein Polymerbindemittel und einen sekundären elektronischen Leiter, das die Oberfläche des mit dem Elektrolyten imprägnierten Separators bedeckt, und
    (iv) einen Stromkollektor der Kathode, zum Beispiel aus Aluminium.

16. Superkondensator, enthaltend eine Elektrode nach einem der Ansprüche 1 bis 11.

200

A ↓                                                    ↓ A'

FIG.1A.

103

102

AA'

FIG.1B.

101

100

FIG.1.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870639